# FASCICULE DE BREVET EUROPEEN

(11) **EP 1 445 023 B1**
(45) Date de publication et mention de la délivrance du brevet: **07.11.2007**
(21) Numéro de dépôt: 04370002.0
(22) Date de dépôt: 03.02.2004
(51) Int. Cl.: B03B 9/06

(54) **Procédé de recyclage de boites de conserve et installation pour la mise en oeuvre du procédé**
Verfahren zur Wiederverwertung von Konservendosen und Vorrichtung zur Durchführung
Method for recycling cans and device for performing it

(30) Priorité: 10.02.2003 FR 0301560
(43) Date de publication de la demande: 11.08.2004
(73) Titulaire: Hannibal, Sarl, 59000 Lille (FR)
(72) Inventeur: Lannoy, Guy, 59000 Lille (FR)
(74) Mandataire: Hennion, Jean-Claude

(56) Documents cités:
- DE-A- 3 621 836
- DE-A- 4 119 659
- DE-U- 8 813 104
- FR-A- 2 622 172
- GB-A- 2 129 726
- US-A- 3 155 028

## Description

L'invention se rapporte au domaine technique du recyclage des boîtes de conserve.

En France, la loi du 13 juillet 1992 a obligé, à compter du 1^{er} juillet 2002 les installations d'élimination de déchets par stockage à ne recevoir que des déchets ultimes.

Cette loi impose donc la revalorisation de déchets, c'est à dire leur réemploi, leur recyclage ou toute autre action visant à obtenir, à partir de déchets, des matériaux réutilisables ou de l'énergie.

Le décret du 1^{er} avril 1992 met en place une réglementation spécifique concernant l'élimination des déchets résultant de l'abandon d'emballages.

Il met en oeuvre les dispositions des directives européennes de 1975 et 1991 (directive 75-442 du 15 juillet 1975, modifiée par la directive 91-156 du 18 mars 1991).

Le principe est que le producteur, importateur ou le responsable de la première mise sur le marché du produit est tenu de pourvoir ou de contribuer à l'élimination des déchets d'emballage.

Dans ce cadre juridique, se pose notamment le problème du recyclage des boîtes de conserve.

Certaines de ces boîtes sont en aluminium. En France, environ 30 % des boîtes boisson sont en aluminium contre 50 % en Europe, 75 % pour le Royaume Uni et plus de 90 % aux Etats Unis ou en Suède.

En 1997, en France, il a été estimé que 7100 tonnes de boîtes de conserve en aluminium étaient contenues dans les déchets ménagers, et environ 8700 tonnes de boîtes boisson en aluminium.

En France, les emballages d'aluminium sont récupérés par la collecte sélective, avec les autres emballages (essentiellement par collecte porte à porte).

La faiblesse du gisement explique qu'il n'y a pas, généralement, de collecte séparative pour l'aluminium, contrairement à d'autres pays comme la Suède ou les Etats Unis.

Ces deux pays ont adopté un système de consigne : un ticket est remis à celui qui rapporte la boîte dans un collecteur ou un supermarché, qui est remboursé par la suite.

Les volumes de boîtes de conserve et boîtes boisson en aluminium récupérées en collecte sélective restent en France extrêmement faibles, de l'ordre de quelques centaines de tonnes.

Les quelques essais de tri automatique par machine à courant de Foucault n'ont pas jusqu'à présent donné de résultats probants, dans la mesure où la machine sélectionne tout emballage ayant une trace d'aluminium, y compris par conséquent les emballages multi-couches,multi-matériaux tels que par exemple emballages briques de lait.

De sorte que la récupération de l'aluminium s'effectue à partir du machefer d'incinération par machine à courant de Foucault. L'aluminium récupéré à partir de ces machefers d'incinération représentait en France en 1998, 4500 tonnes, soit environ 10 fois plus que l'aluminium issus des centres de tri sélectif.

Du fait de ces impuretés, l'aluminium collecté à partir des machefers subit une décote de l'ordre de 30 % par rapport au prix de l'aluminium récupéré à partir des centres de tri.

Il est donc particulièrement souhaitable de récupérer les boîtes boisson et boîtes de conserve en aluminium, dans les centres de tri, en réduisant au minimum les impuretés qu'elles peuvent contenir.

En ce qui concerne les boîtes boisson et boîtes de conserve en acier, on estime que 4 milliards de boîtes sont fabriquées et consommées en France, 24 milliards en Europe et 150 milliards dans le Monde chaque année.

Les 3/4 des boîtes boisson consommées en France sont en acier, les 4/5 des boîtes de conserve appertisées consommées en France étant en acier.

Ces aciers, parfois dénommés fer blanc, sont des aciers plats de faible épaisseur recouverts d'étain et vernis.

Ce mode de conditionnement est utilisé à plus de 85 % pour les plats cuisinés et 94 % dans les conserves pour animaux.

Environ 50 % de ces boîtes de conserve et boîtes boisson jetées en France chaque année sont repris par la filière de recyclage.

Plusieurs pistes sont envisagées en France pour améliorer la qualité des ferrailles collectées et le tri sélectif : compactage systématique, broyage à l'aide d'un broyeur à marteau ou d'un broyeur à couteau.

Le broyage à marteau, aujourd'hui réservé aux aciers en sortie d'incinération, représente un investissement très lourd, le broyeur à couteaux étant plus adapté aux collectes sélective.

On peut trouver, dans l'état de la technique, de très nombreux documents décrivant des dispositifs d'aplatissement de boîtes de conserve vides.

Ainsi, par exemple, le brevet américain délivré le 7 avril 1970 sous le n° US-A-3.504.621 décrit un aplatisseur de ce type comprenant trois paires de rouleaux à entraînement par chaînes permettant l'écrasement de conteneurs.

Le brevet américain délivré en 1972 sous le n° US-A-3.687.062 décrit un aplatisseur pour boîtes métalliques vides permettant également de casser les bouteilles en verre, cet aplatisseur comprenant deux cylindres dentés montés sur des axes parallèles entraînés par un moteur électrique.

L'oscillation des mâchoires permet le broyage des conteneurs métalliques et l'écrasement des boîtes métalliques.

On peut se reporter également aux documents suivants :
- brevets américains délivrés sous les n° 5.025.995, 5.211.109, 3.489.354 ;
- demande de brevet français publiée sous le n° 2.711.552.

Le brevet américain délivré le 5 septembre 1989 sous le n° 4.862.796 indique que l'aplatissement de boîtes boisson conduit à de nombreux problèmes liés au nettoyage et à la maintenance de l'aplatisseur, les boissons de type soft-drink étant corrosives.

Pour faciliter le nettoyage, ce document antérieur propose une géométrie de cylindres à aplatisseur particulière pourvue d'extensions radiales.

Le brevet américain publié en 1972 sous le n° 3.645.199 décrit l'aplatissement de plateaux métalliques alimentaires, par exemple en restauration collective.

Pour des raisons sanitaires, les plateaux sont nettoyés avant aplatissement.

Le brevet canadien publié en 1994 sous le n° 2.090.896 décrit une installation pour l'aplatissement de réservoirs d'essence automobile.

Le dispositif décrit dans ce document canadien est pourvu de moyens de récupération du carburant s'échappant des réservoirs au cours de l'aplatissement.

Le brevet américain publié en 1994 sous le n° US-A-5.298.079 décrit l'aplatissement de filtres à huile automobile usagés, cet aplatissement étant réalisé simultanément au lavage de ces filtres à l'aide d'un surfactant, de sorte à éliminer l'huile résiduelle facilitant ainsi le recyclage des parties métalliques du filtre.

Le brevet américain publié le 8 août 1995 sous le n° US-A-5.438.918 décrit la lacération de boîtes de conserve alimentaire périmées, cette lacération étant accompagnée d'une séparation par vibration, projection d'eau et champ magnétique.

Dans le même esprit, on peut se reporter au brevet américain publié en 1998 sous le n° US-A-5.848.754.

Le document DE 88.13.104U concerne une installation de recyclage de boites de conserve qui comprend un aplatisseur à deux rouleaux de pré-compactage et un broyeur.

Aucune des solutions proposées dans l'art antérieur pour l'aplatissement de boîtes de conserve ou d'autres conteneurs métalliques n'est adaptée aux problèmes techniques particuliers posés par le recyclage de boîtes métalliques pleines.

Les industries agro-alimentaires sont parfois confrontées à des rebus par suite d'un défaut accidentel sur chaînes de fabrication (défaut de stabilité, d'étanchéité, de marquage, d'intégrité ou tout autre défaut produit).

Les boîtes de conserve sont conventionnellement bloquées le temps d'assurer la conformité du produit.

Les conserves non conformes doivent être éliminées.

Pour les motifs présentés précédemment, il est exclu de placer ces conserves en décharge et il est nécessaire de récupérer la fraction métallique valorisable et la fraction organique, en expulsant le contenu de la boîte d'une manière rapide, efficace et économique, chacune des deux fractions pouvant être valorisée dans la filière adaptée.

L'invention vise tout particulièrement à apporter une solution à ces problèmes techniques.

A cette fin, l'invention se rapporte, selon un premier aspect, à une installation apte à mettre en oeuvre un procédé de recyclage de boîtes de conserve, comprenant une première étape d'aplatissement de boîtes de conserve vides et/ou de boîtes de conserve pleines, les boîtes étant après aplatissement, soumises à au moins une séparation de la fraction organique et métallique et au moins un lavage -par flottation et/ou par passage dans un tambour rotatif muni d'un laveur à haute pression- et un broyage.

Selon diverses réalisations, le procédé présente les caractères suivants, le cas échéant combinés :
- le tambour rotatif de lavage et séparation est disposé au dessus d'une cuve de récupération des matières organiques provenant du lavage et de la séparation des boîtes aplaties lors de leur transit dans le tambour ;
- le broyage est effectué à l'aide d'un broyeur à lames ou cisailles rotatives à deux axes, de sorte à assurer une découpe en lamelles des boîtes aplaties lavées ;
- les produits du broyage sont introduits dans une installation de lavage ;
- l'installation de lavage des produits de broyage comprend un laveur de type épierreur, et/ou un séparateur à tambour rotatif ;
- le séparateur à tambour rotatif est disposé au dessus d'une cuve de récupération des matières organiques ;
- le séparateur à tambour rotatif baigne au moins en partie, au cours de sa rotation, dans une cuve de récupération des matières organiques ;
- les boîtes aplaties sont lavées puis broyées en lamelles, ces lamelles étant lavées pour être ensuite compressées;
- les lamelles issues du broyage sont au moins en partie séchées après lavage et avant compression.

Dans diverses réalisations, l'installation présente les caractères suivants, le cas échéant, combinés :
l'aplatisseur comprend deux rouleaux supérieurs pourvus de dents ou volets radiaux permettant un premier écrasement des boîtes et un acheminement régulier des boîtes vers l'espace d'écrasement défini par au moins deux rouleaux inférieurs ;
- les rouleaux sont motorisés et reliés entre eux par un jeu de chaînes ou équivalents ;
- le tambour rotatif séparateur comprend au moins un longeron provoquant des chutes des boîtes aplaties lors de leur passage.

D'autres objets et avantages de l'invention apparaîtront au cours de la description suivante de modes de réalisation, description qui va être effectuée en se référant aux dessins annexés qui représentent schématiquement divers modes de réalisation d'une installation selon l'invention.

La machine comprend un aplatisseur 1 pourvu d'une trémie 2 par laquelle sont introduites les boîtes de conserve pleines entre des rouleaux 5, motorisés par un jeu de chaînes 4, qui viennent happer, entraîner et écraser les boîtes de conserve.

Pour éviter l'engorgement des rouleaux aplatisseurs 3, les cylindres 5 pourvus de dents ou de volets radiaux 6 permettent un premier écrasement et l'acheminement régulier des boîtes de conserve entre les rouleaux aplatisseurs inférieurs 3.

Avantageusement, les cylindres 5 sont à écartement réglable de sorte à s'adapter au format des boîtes à aplatir.

L'écartement des rouleaux aplatisseurs 3 est réglable suivant la grosseur des emballages, de façon à imposer une pression sur les boîtes telle qu'elles se rompent à leur point de faiblesse, par exemple zone de sertissage ou ligne d'amincissement pour les boîtes à ouverture facile.

Les rouleaux aplatisseurs 3 sont-avantageusement pourvus d'encoches longitudinales ou de rainures assurant l'accroche des boîtes précompactées par les cylindres supérieurs 5.

A titre d'exemple, l'écartement E1 entre les pales ou volets radiaux 6 des cylindres 5 sera, en position haute de ces pales, supérieur de 10 % au diamètre D des boîtes à écraser.

La hauteur H des pales ou volets radiaux sera avantageusement telle qu'une ligne reliant les extrémités radiales des pales des deux cylindres 5 passe au dessus de l'axe de révolution d'une boîte à écraser, posée sur les deux cylindres 5.

L'écartement E2 entre les cylindres 5 sera avantageusement de l'ordre de un tiers à un demi diamètre de boîte à écraser.

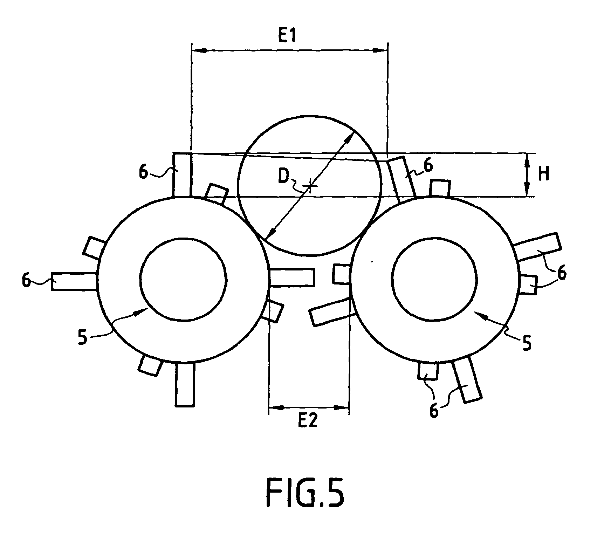

Ces dispositions sont illustrées en figure 5.

E1 vaudra par exemple 210 mm pour les boîtes 3/1, 5/1 et 180 mm pour les boîtes 4/4, 1/2, 1/4.

Un ressort 7 ou tout autre moyen équivalent exerce une sorte de poussée sur la cage de roulement d'un des rouleaux aplatisseurs 3, de manière à maintenir la force d'écrasement des deux rouleaux tout en permettant leur écartement en cas d'arrivée de matière trop abondante.

La force du ressort ou du vérin 7 est réglable.

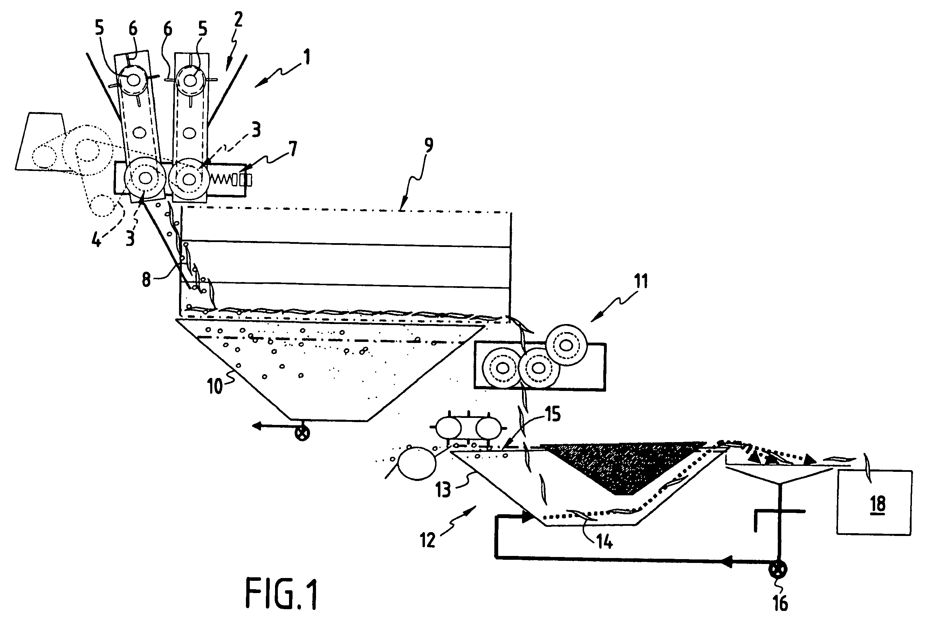

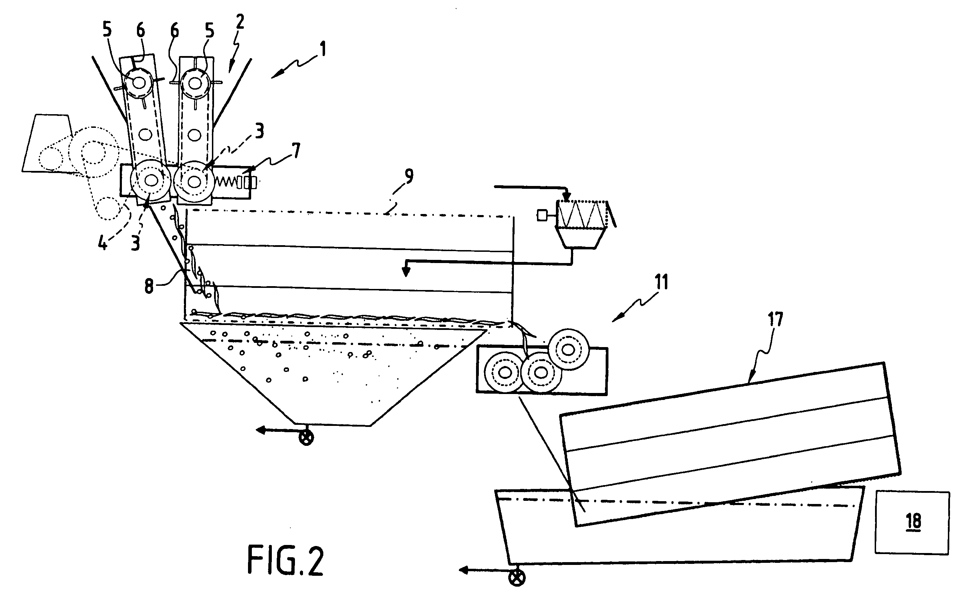

Dans un premier mode de réalisation, les boîtes de conserve aplaties 8 sortant de l'aplatisseur 1 sont déversées en entrée d'un séparateur à tambour rotatif 9 ainsi qu'il est représenté sur les figures 1 et 2.

En dessous du séparateur à tambour rotatif, la fraction organique est récupérée en vue de sa valorisation, par une cuve 10.

Les matières, notamment matières organiques, s'écoulant au travers du tambour rotatif passent dans la cuve 10 pour y subir un traitement approprié.

En sortie du tambour rotatif, un broyeur à lames ou cisailles rotatives à deux axes 11 assure une découpe en lamelles de la boîte de conserve écrasée.

L'emploi d'un broyeur à deux axes permet avantageusement d'obtenir des lamelles métalliques de formes permettant une bonne tenue des balles compactées 18.

A la sortie de ce broyeur, le produit broyé est introduit, dans une première réalisation représentée en figure 1, dans un laveur 12 de type épierreur, une cuve 13 maintenue en turbulence séparant les matières denses 14 des matières organiques 15.

Un tel épierreur est par exemple du type décrit dans le document FR-A-2.751.566.

Des matières denses 14 sont reprises par un flux généré par une pompe 16, ce flux s'exerçant en fond de cuve 13 et pouvant être remplacé, le cas échéant, par une bande transporteuse. La matière organique 15, quant à elle, est mise en suspension dans le liquide turbulent contenu dans la cuve 13 et est reprise par débordement pour être séparé par un dégrilleur. Le liquide contenu dans la cuve 13 est recyclé. Le cas échéant, des agents floculants ou autre adjuvants sont mélangés au liquide contenu dans la cuve 13 de sorte à faciliter le lavage.

Dans une autre réalisation représentée en figure 2, le produit broyé issu du broyeur à lames ou cisailles rotatives 11 est introduit dans un tambour rotatif 17 pourvu de petites perforations et se trouve nettoyé à l'aide d'un laveur haute pression de type connu en soi.

En tout état de cause, en sortie du tambour rotatif 17 ou en sortie du laveur épierreur 12, les lamelles métalliques nettoyées qui sont récupérées sont avantageusement pressées de sorte à former des paquets compacts référencés 18 sur les figures 1 et 2.

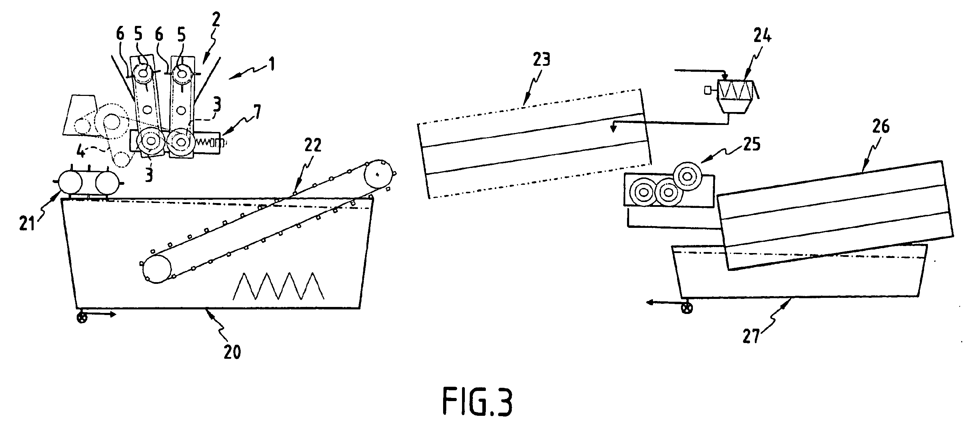

Dans la variante de réalisation représentée en figure 3, en sortie de l'aplatisseur 1, un laveur de type épierreur 20 pourvu d'un séparateur à débordement 21 et d'un tapis incliné 22 assure un premier lavage des boîtes aplaties, ces boîtes passant ensuite dans un séparateur à tambour rotatif 23 à lavage haute pression 24, les boîtes aplaties lavées sortant du tambour rotatif 23 passant ensuite dans un broyeur à lames ou cisailles rotatives à deux axes 25, les lamelles métalliques sortant de ce broyeur étant introduites dans un deuxième tambour rotatif séparateur 26 tournant dans une cuve de lavage 27.

Les lamelles métalliques lavées sortant du séparateur à tambour rotatif 26 peuvent, par la suite, être pressées en paquets compacts, tout comme dans les modes de réalisation des figures 1 et 2.

Le cas échéant, en sortie des tambours de lavage référencés 17,26 dans les modes de réalisation des figures 2 et 3, un tapis de séchage permettra d'abaisser le taux d'humidité présent sur les lamelles métalliques avant leur pressage.

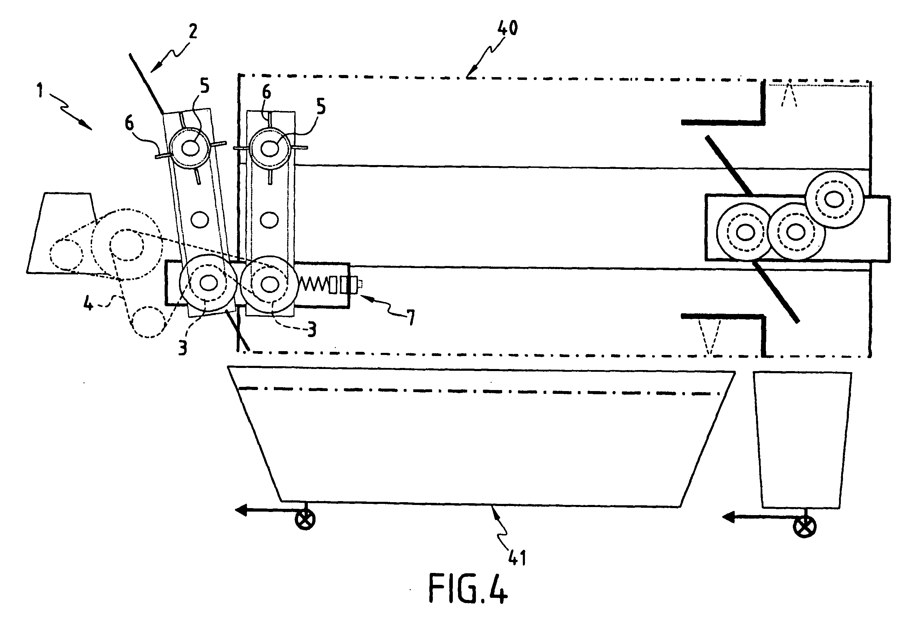

Ainsi qu'il est représenté en figure 4, de sorte à obtenir une installation très compacte, l'aplatisseur 1 et le broyeur à lames ou cisailles référencé en figures 1 à 3 sous les n° 11,25 peuvent être placé aux deux parties extrêmes d'un tambour de séparation rotatif 40, les boîtes de conserve aplaties étant régulièrement acheminées vers le broyeur 11, une cuve de récupération de la fraction organique 41 disposée en dessous du tambour rotatif de séparation 40 permettant un premier traitement de la matière organique expulsée des boîtes de conserve lors de leur aplatissement.

## Revendications

1. Installation de recyclage de boîtes de conserve vides et/ou de boîtes de conserve pleines comprenant au moins un aplatisseur (1) à deux rouleaux et un broyeur (11), ledit aplatisseur comprenant également deux cylindres (5) de pré-compactage, à écartement réglable, **caractérisé en ce que** chacun desdits cylindres de pré-compactage (5) est muni de pales radiales (6) et **en ce que** ladite installation comprend également, en aval de l'aplatisseur, des moyens de lavage et séparation des boîtes aplaties par flottation (12) et/ou par passage dans un tambour rotatif (17) muni d'un laveur à haute pression.

2. Installation selon la revendication 1, pour le recyclage de boites de conserve ayant un diamètre (D) donné, **caractérisée en ce que** l'écartement (E1) entre les pales radiales (6) desdits cylindres (5), lorsque lesdites pales sont en position haute des cylindres, est supérieur de 10% au diamètre (D) des boîtes à écraser.

3. Installation selon l'une des revendications 1 ou 2, pour le recyclage de boites de conserve ayant un axe de révolution donné, **caractérisée en ce que** la hauteur (H) des pales est telle qu'une ligne, reliant les extrémités radiales des pales en position haute des deux cylindres, passe au-dessus de l'axe de révolution d'une boîte posée sur les deux cylindres.

4. Installation selon l'une des revendications 1 à 3, pour le recyclage de boites de conserve ayant un diamètre (D) donné, **caractérisée en ce que** l'écartement (E2) entre les cylindres est de l'ordre de un tiers à un demi diamètre (D) des boîtes à écraser.

5. Installation selon l'une des revendications 1 à 4 **caractérisée en ce que** les deux cylindres de pré compactage sont en amont de deux rouleaux aplatisseurs à écartement et à force d'écrasement réglables.

6. Installation selon la revendication 5 **caractérisée en ce qu'**elle comprend une cuve de récupération de la fraction organique disposée sous le tambour rotatif de séparation.

7. Installation selon la revendication 6 **caractérisée en ce que** le tambour rotatif baigne au moins en partie, au cours de sa rotation, dans la cuve de récupération de la fraction organique.

8. Installation selon l'une des revendications 1 à 7 **caractérisée en ce que** le broyeur est à lames ou cisailles rotatives à deux axes.

9. Installation selon l'une des revendications 1 à 8 **caractérisée en ce qu'**elle comprend, en aval du broyeur, un laveur de type épierreur et/ou un séparateur à tambour rotatif.

10. Installation selon l'une des revendications 1 à 9 **caractérisée en ce qu'**elle comporte, en aval du broyeur, des moyens de compression aptes à compresser les lamelles résultant du broyage des boîtes aplaties, et éventuellement des moyens de lavage et des moyens de séchage des lamelles avant compression.

## Claims

1. An installation for the recycling of empty food cans and/or of full food cans, which includes at least one two-rollers flattening machine (1) and a crusher (11), said flattening machine also including two pre-compacting cylinders (5), whose separation is adjustable, **characterised in that** each of the said pre-compacting cylinders (5) is equipped with radial vanes (6), and **in that** the said installation also includes, downstream of the flattening machine, means for washing and separation of the flattened cans by floatation (12) and/or by passage in a rotary drum (17) equipped with a high-pressure washer.

2. The installation according to claim 1, for the recycling of food cans of a given diameter (D), **characterised in that** the separation (E1) between the radial vanes (6) of the said cylinders (5), when the said vanes are in the up position of the cylinders, is 10% greater than the diameter (D) of the cans to be crushed.

3. The installation according to one of claims 1 or 2, for the recycling of food cans with a given axis of revolution, **characterised in that** the height (H) of the vanes is such that a line, connecting the radial extremities of the vanes in the up position of the two cylinders, passes above the axis of revolution of a can placed on the two cylinders.

4. The installation according to one of claims 1 to 3, for the recycling of food cans of a given diameter (D), **characterised in that** the separation (E2) between the cylinders is of the order of a third to a half diameter (D) of the cans to be crushed.

5. The installation according to one of claims 1 to 4 **characterised in that** the two pre-compacting cylinders are upstream of two flattening rollers whose separation and crushing force are adjustable.

6. The installation according to claim 5, **characterised in that** it includes a tank for recovery of the organic fraction placed under the separation rotary drum.

7. The installation according to claim 6, **characterised in that** the rotary drum is immersed at least in part, in the course of its rotation, in the tank for recovery of the organic fraction.

8. The installation according to one of claims 1 to 7, **characterised in that** the crusher includes blades or shears rotating on two axes.

9. The installation according to one of claims 1 to 8, **characterised in that**, downstream of the crusher, it includes a washer of the stone-removing type and/or a rotary separator drum.

10. The installation according to one of claims 1 to 9, **characterised in that**, downstream of the crusher, it includes compression means designed to compress the strips resulting from crushing of the flattened cans and, if necessary, means for washing and drying the strips before compression.

## Patentansprüche

1. Einrichtung zum Recycling von leeren Konservendosen und/oder gefüllten Konservendosen, umfassend eine Quetschvorrichtung (1) mit zwei Rollen und einen Zerkleinerer (11), wobei die Quetschvorrichtung auch zwei Zylinder (5) zur Vorkompaktierung umfaßt, mit regelbarer Beabstandung, **dadurch gekennzeichnet, daß** jeder der Zylinder zur Vorkompaktierung (5) mit radialen Schaufeln (6) versehen ist, und **dadurch**, daß die Einrichtung stromabwärts des Flachmachers auch Mittel zum Waschen und Trennen der flach gemachten Dosen durch Flotation (12) und/oder durch Durchgang durch eine mit einem Hochdruckwäscher versehene Drehtrommel (17) umfaßt.

2. Einrichtung nach Anspruch 1 zum Recycling von Konservendosen mit einem vorgegebenen Durchmesser (D), **dadurch gekennzeichnet, daß** die Beabstandung (E1) zwischen den radialen Schaufeln (6) der Zylinder (5), wenn die Schaufeln in oberer Position des Zylinders sind, 10 % größer als der Durchmesser (D) der zu zerdrückenden Dosen ist.

3. Einrichtung nach einem der Ansprüche 1 oder 2 zum Recycling von Konservendosen mit einer vorgegebenen Drehachse, **dadurch gekennzeichnet, daß** die Höhe (H) der Schaufeln derart ist, daß eine Linie, welche die radialen Enden der Schaufeln in oberer Position der beiden Zylinder verbindet, oberhalb der Drehachse einer Dose verläuft, die auf den beiden Zylindern ruht.

4. Einrichtung nach einem der Ansprüche 1 bis 3 zum Recycling von Konservendosen mit einem vorgegebenen Durchmesser (D), **dadurch gekennzeichnet, daß** die Beabstandung (E2) zwischen den Zylindern in der Größenordnung von einem drittel bis einem halben Durchmesser (D) der zu zerdrückenden Dosen ist.

5. Einrichtung nach einem Ansprüche 1 bis 4, **dadurch gekennzeichnet, daß** die beiden Zylinder zur Vorkompaktierung stromaufwärts von zwei Flachmacherrollen mit regelbarer Beabstandung und Zerdrückungskraft sind.

6. Einrichtung nach Anspruch 5, **dadurch gekennzeichnet, daß** sie ein Gefäß zur Gewinnung der organischen Fraktion umfaßt, das unter der Drehtrommel zur Trennung angeordnet ist.

7. Einrichtung nach Anspruch 6, **dadurch gekennzeichnet, daß** die Drehtrommel wenigstens teilweise während ihrer Rotation in dem Gefäß zur Gewinnung der organischen Fraktion badet.

8. Einrichtung nach einem der Ansprüche 1 bis 7, **dadurch gekennzeichnet, daß** der Zerkleinerer drehbare Klingen oder Scheren mit zwei Achsen aufweist.

9. Einrichtung nach einem der Ansprüche 1 bis 8, **dadurch gekennzeichnet, daß** sie stromabwärts des Zerkleinerers einen Wäscher vom Typ Abscheider und/oder einen Trenner mit Drehtrommel umfaßt.

10. Einrichtung nach einem der Ansprüche 1 bis 9, **dadurch gekennzeichnet, daß** sie stromabwärts des Zerkleinerers Kompressionsmittel, die ausgelegt sind, die Scheiben, die aus der Zerkleinerung der flach gemachten Dosen resultieren, zu komprimieren, und ggf. Mittel zum Waschen und Mittel zum Trocknen der Scheiben vor der Komprimierung umfaßt.
